# EUROPEAN PATENT SPECIFICATION

(11) **EP 3 037 650 B1**
(45) Date of publication and mention of the grant of the patent: **12.09.2018**
(21) Application number: 14199580.3
(22) Date of filing: 22.12.2014
(51) Int. Cl.: F02M 51/06, F02M 61/08, F02M 61/20, F02M 61/16, F16J 3/04

(54) **Valve assembly and fluid injection valve**
Ventilanordnung und Flüssigkeitseinspritzventil
Ensemble de soupape et soupape d'injection de fluide

(43) Date of publication of application: 29.06.2016
(73) Proprietor: Continental Automotive GmbH, 30165 Hannover (DE)
(72) Inventor: Filippi, Stefano, 57010 Castel' Anselmo Collesalvetti (IT); Grandi, Mauro, 57128 Livorno (IT); Lenzi, Francesco, 57128 Livorno (IT); Polidori, Valerio, 57128 Livorno (IT)

(56) References cited:
- EP-A1- 1 731 754
- EP-A1- 1 995 447
- DE-A1- 4 131 535
- DE-A1-102005 022 672
- DE-A1-102007 049 963
- DE-A1-102009 027 528
- US-A1- 2010 102 146

## Description

The present disclosure relates to a valve assembly and to a fluid injection valve with the valve assembly.

Fluid injection valves are in widespread use, for example in automotive applications.

DE 102007049963 A1 discloses a fuel injection valve having an excitable actuator in the form of an electromagnetic circuit, comprising a magnetic coil, an outer magnetic circuit component, and a movable armature for activating a valve closing body interacting with a valve seat provided on a valve seat body. A fitting is provided on the inflow side, which has a flow bore that allows the inflow of fuel in the direction of the valve seat, wherein an adjustment element is provided in the flow bore for adjusting a spring tension of a return spring tensioned on the adjustment element, said element comprising a fuel filter. The fuel filter has a cup-shaped base body, which ends at a filter base, wherein the filter base is configured in reverse in a bowl shape, and is suspended downstream in the fitting at the free base end thereof. The fuel injection valve is particularly suited for use in fuel injection systems of mixture-compressing, spark-ignited internal combustion engines.

DE 4131535 A1 relates to an injection valve with a fuel filter having a filter casing on which is supported the return spring and which is connected to a frame pressed into the flow drilling so that the force introduced into the fuel filter by the return spring is conducted via the filter casing and the frame into the core. No adjusting bush for regulating the spring force is thus necessary. The injection valve is suitable in particular for fuel injection systems in mixture-compressing internal combustion engines with spark ignition.

The fuel injection valve disclosed by DE 102005022672 A1 has a fuel inlet passage which is constructed as a pressure capsule and is mechanically connected to the valve needle. The inlet passage is elastically expandable in the axial direction in such a way that a predetermined lift is carried out by the valve needle, and the inlet passage acts upon the valve needle as a return spring. The inlet passage which acts as a return spring is tension-loaded. The valve spindle has a feed passage extending in the direction of the valve seat, the inlet of the feed passage communicating with the fuel inlet passage.

DE 102009027528 A1 relates to an apparatus for injecting fuel which has a valve needle open towards outside, a piezoactuator which is connected with the valve needle to actuate the valve needle and a valve body, in which the valve needle is arranged. The valve body has two needle guides, on which the valve needle is guided. A restoring element is provided which is connected with the valve needle on a force introducing position for transmitting a restoring force. A sealing element provides a sealing between an actuator chamber and a fuel chamber. The device further comprises a filter which is arranged directly in front of or inside an inflow opening formed in the valve body. The filter is arranged within the restoring element. It is fastened to the valve body by pressing and the restoring element is pushed over it.

EP 1995447 A1 discloses a valve assembly of an injection valve comprising a first valve body including a central longitudinal axis and comprising a first cavity, a second valve body being rigidly coupled to the first valve body and comprising a second cavity with a fluid outlet portion, and a valve needle axially movable in the first cavity and the second cavity. The valve needle prevents a fluid flow through the fluid outlet portion of the second cavity in a closing position and releases the fluid flow through the fluid outlet portion in further positions. The second valve body comprises a passage being arranged between the first cavity and the second cavity directly upstream the second cavity and being designed to enable a fluid flow from the first cavity to the second cavity. A filter is arranged directly upstream or inside the passage and is designed to filter fluid flowing from the first cavity to the second cavity.

It is an object of the present disclosure to specify an improved valve assembly for a fluid injection valve.

This object is achieved by a valve assembly having the features of claim 1. Advantageous embodiments and developments of the valve assembly and the fluid injection valve are specified in the dependent claims, the following description and the drawings.

According to a first aspect, a valve assembly for a fluid injection valve is disclosed. According to a second aspect, a fluid injection valve comprising the valve assembly is disclosed. The fluid injection valve is in particular a fuel injection valve. It is preferably configured for injecting liquid fuel, such as gasoline, directly into a combustion chamber of an internal combustion engine.

The valve assembly comprises a valve body. The valve body has a fluid inlet end, a fluid outlet end, and a cavity which hydraulically connects the fluid inlet end to the fluid outlet end. Further, the valve assembly has a valve needle which interacts with the valve body for preventing fluid flow from the fluid outlet end in a closing position and which is displaceable away from the closing position to enable fluid flow out of the valve body from the fluid outlet end. In particular, a sealing element of the valve needle is in sealing mechanical contact with a valve seat of the valve body in the closing position and is axially displaceable along a longitudinal axis of the valve needle away from the valve seat for enabling the fluid flow.

In addition, the valve assembly comprises a return spring element which has a first end and a second end. The first and second ends are in particular axially opposite ends of the return spring assembly. The return spring assembly is seated against the valve needle at the first end and against the valve body at the second end and is preloaded for biasing the valve needle towards the closing position. The return spring element comprises a filter sieve for filtering the fluid which flows through the cavity to the fluid outlet end in operation of the valve assembly.

In this way, the valve assembly has a particularly low risk for leakage at the fluid outlet end or for stuck-open type failures due to contamination with particles such as metal or plastic particles. Due to the integration of the filter into the return spring element, assembling of the valve assembly is particularly easy.

The return spring element comprises an elastically deformable bellows which is pre-compressed in the valve assembly for biasing the valve needle towards the closing position. The bellows is, in other words, a corrugated sleeve. The bellows is preferably a metal bellows. Adequate spring constants for biasing the valve needle towards the closing position are easily achievable by means of such a design.

In one embodiment, the return spring element comprises a rigid, annular end piece at the first end and/or at the second end. The end piece or the end pieces are preferably in the shape of a ring or a sleeve. In an expedient embodiment, axial end sections of the bellows are fixed to the respective end pieces in fluid tight fashion. The end piece or the end pieces are preferably metal parts. They may expediently be connected to the bellows by means of a welded connection.

According to the invention, the bellows comprises a multitude of filter holes which perforate the bellows for forming the filter sieve or a section of the filter sieve. For example, the bellows has an inner circumferential surface and an outer circumferential surface and the filter holes penetrate the bellows from the outer circumferential surface to the inner circumferential surface, in particular to enable a fluid flow in a generally radial direction from outside of the bellows towards a central axis of the bellows which is preferably parallel or coaxial to the longitudinal axis of the valve needle. By means of the bellows, a particularly large filter area is achievable. In addition, the bellows - as a specific shape of a sleeve - allows for easy sealing of the return spring element against the valve body and/or the valve needle to define the fluid path through the filter sieve.

Alternatively or additionally, the end piece or at least one of the end pieces comprises a multitude of filter holes which perforate the end piece for forming the filter sieve or a section of the filter sieve. For example, the end piece has a basic shape of a cylindrical shell which is perforated in radial direction by the filter holes.

Preferably, the filter holes which penetrate the bellows and/or the end piece(s) have a mean diameter between 10 µm and 200 µm, preferably between 20 µm and 40 µm, the limits being included in each case. For example the mean diameter of the filter holes is approx. 30 µm. In a preferred development, all filter holes have - apart from typical production tolercances - the same diameter. In this way, it is possible to filter particles of sizes which have a high risk for adversely affecting the sealing at the fluid outlet end.

In one embodiment, the valve needle has a seat plate which comprises a spring seat of the valve needle. The first end of the return spring element sealingly rests against the spring seat of the valve needle in an expedient development. In another embodiment, the valve body has a seat portion which comprises a spring seat of the valve body. The second end of the return spring element sealingly rests against the spring seat of the valve body in an expedient development. In this way, the cavity of the valve body may expediently be divided in an upstream section which comprises the fluid inlet end and a downstream section which comprises the fluid outlet end, the two sections being separated from one another by means of the return spring element and the region of the valve needle comprising the seat plate in such fashion that fluid has to pass the filter sees of the return spring element on its way from the first section to the second section.

In one embodiment, the seat portion of the valve body is positioned, in direction along the longitudinal axis of the valve needle, between the seat plate and the sealing element of the valve needle which is positioned adjacent to the fluid outlet end. In this way, the filter sieve is positioned particularly close to the fluid outlet end. In this way, it is operable to remove contamination inside a particularly large portion of the cavity. In contrast thereto, filters in conventional fluid injection valves are often placed adjacent to the fluid inlet end so that they are unable to remove particles which are, for example, contaminating the cavity during assembling of the valve assembly.

In one embodiment, the seat plate, the seat portion and the return spring element extend circumferentially around the longitudinal axis. In this way, a particularly space-saving design and a position of the filter sieve particularly close to the fluid outlet end are achievable.

In one embodiment, the cavity of the valve body has a first portion and a second portion downstream of the first portion. The second portion is hydraulically connected to the first portion by means of at least one opening. The second portion extends from the seat portion towards the fluid outlet end and has a smaller cross-sectional area than the first portion. It is positioned such that it is laterally surrounded by the seat portion.

The valve needle extends from the second portion into the first portion so that the seat plate is positioned in the first portion. For example, a shaft of the valve needle is received in the second portion and extends beyond the second portion into the first portion, where the seat plate is fixed to the shaft. At the downstream end of the first portion, the sealing element of the valve needle may project from the first portion. This is in particular the case when the fluid injection valve is an outward opening valve. In this type of valve, the valve needle is displaced away from the closing position in axial direction from the fluid inlet end towards the fluid outlet end for opening the valve.

Expediently, the valve needle - in particular the region which comprises the seat plate - together with the return spring element may cover the opening (s) in such fashion that fluid, on its way from the fluid inlet end to the fluid outlet end, has to pass the filter sieve before entering the second portion through the opening. In this way, particles can be filtered from the fluid in direct vicinity of the smaller cross-section second portion.

Further advantages, advantageous embodiments and developments of the valve assembly and the fluid injection valve will become apparent from the exemplary embodiments which are described below in association with the figures.

In the figures:
Figure 1 shows a longitudinal section view of a fluid injection valve according to a first exemplary embodiment,
Figure 2 shows an enlarged detail of the fluid injection valve of figure 1, and
Figure 3 shows a portion of the fluid injection valve according to a second exemplary embodiment in a longitudinal section view.

In the exemplary embodiments and figures, similar, identical or similarly acting elements are provided with the same reference symbols. In some figures, individual reference symbols may be omitted to improve the clarity of the figures.

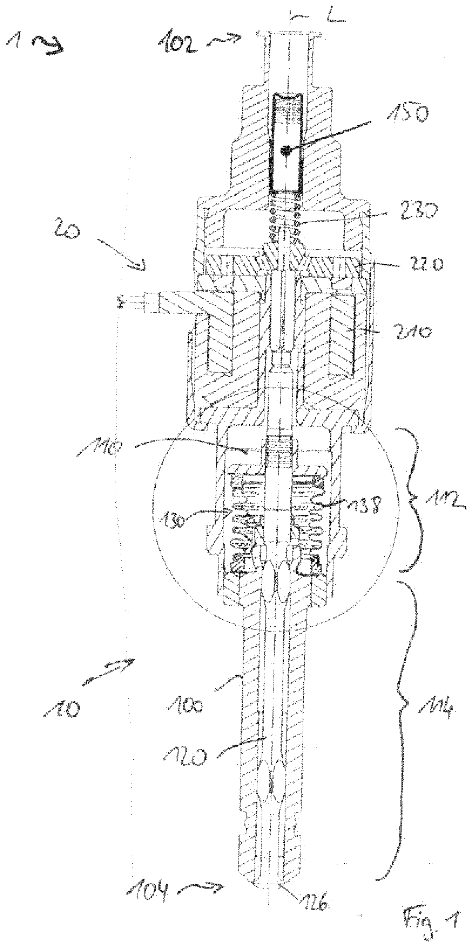

Figure 1 shows a fluid injection valve 1 according to a first exemplary embodiment in a longitudinal section view with respect to a longitudinal axis L. The longitudinal axis L is, in the present embodiment, the central axis of a valve needle 120 and of a valve body 100 of a valve assembly 10 of the fluid injection valve 1. In addition to the valve assembly 10, the fluid injection valve 1 comprises and an electromagnetic actuator assembly 20.

The fluid injection valve 1 is in the present embodiment a fuel injection valve which is configured for injecting fuel -such as gasoline - directly into a combustion chamber of an internal combustion engine.

The valve body 100 extends from a fluid inlet end 102 to a fluid outlet end 104. In the present embodiment, these are also a fluid inlet end of the fluid injection valve 1 and a fluid outlet end of the fluid injection valve 1, respectively. The valve body 100 has a cavity 110 which establishes a fluid path from the fluid inlet end 102 to the fluid outlet end 104 and, thus, hydraulically connects the fluid inlet end 102 and the fluid outlet end 104.

In the present embodiment, the valve body 100 is assembled from a plurality of parts. At the fluid inlet end 102, it has the fuel inlet tube for connecting the fluid injection valve 1 to a fuel rail. Downstream of the fuel inlet tube, a tubular piece of the valve body 100 shapes an armature chamber in which an armature 220 of the electromagnetic actuator assembly 20 is received. Downstream of the tubular piece which shapes the armature chamber, a further piece of the valve body 100 shapes a spring chamber for a return spring element 130 of the valve assembly. A valve needle 120 of the valve assembly extends in the cavity 100 from said further piece of the valve body 100 downstream into a nozzle body of the valve body 100. The nozzle body extends to the fluid outlet end 104 and has a valve seat at the fluid outlet end 104.

The valve needle 120 has a sealing element 126 at the fluid outlet end 14 which mechanically interacts with the valve seat of the nozzle body for opening and closing the valve. In particular, the sealing element 126 is in sealing contact with the valve seat in a closing position of the valve needle to print fluid flow out of the fluid outlet end 104 and is displaceable away in axial direction along the longitudinal axis from the closing position to enable a fluid flow out of the valve body 100 from the fluid outlet end 104.

In the present case of an outward opening fluid injection valve 1, the valve needle 120 is displaceable in the axial direction directed from the fluid inlet end 102 to the fluid outlet end 104 away from the closing position to open a gap between the valve seat and the sealing element 126. The sealing element 126 may axially project beyond the valve body 100 at the fluid outlet end 104.

The return spring element 130 is seated against the valve body 100 and against the seat plate 122 of the valve needle 120 and is preloaded in the valve assembly 10, so that it is operable to bias the valve needle 120 towards the closing position. In order to displace the valve needle 120 away from the closing position, the armature 220 of the electromagnetic actuator assembly 20 is mechanically coupled to the valve needle 120. The electromagnetic actuator assembly 20 further comprises a coil 210 for generating a magnetic field to effect a magnetic force on the armature 220. By means of the magnetic force, the armature is moved axially within the armature chamber of the valve body 100 and, by means of its mechanical coupling to the valve needle 120 transfers a force on the valve needle 120 to move the latter away from the closing position in axial direction against the bias of the return spring element 130.

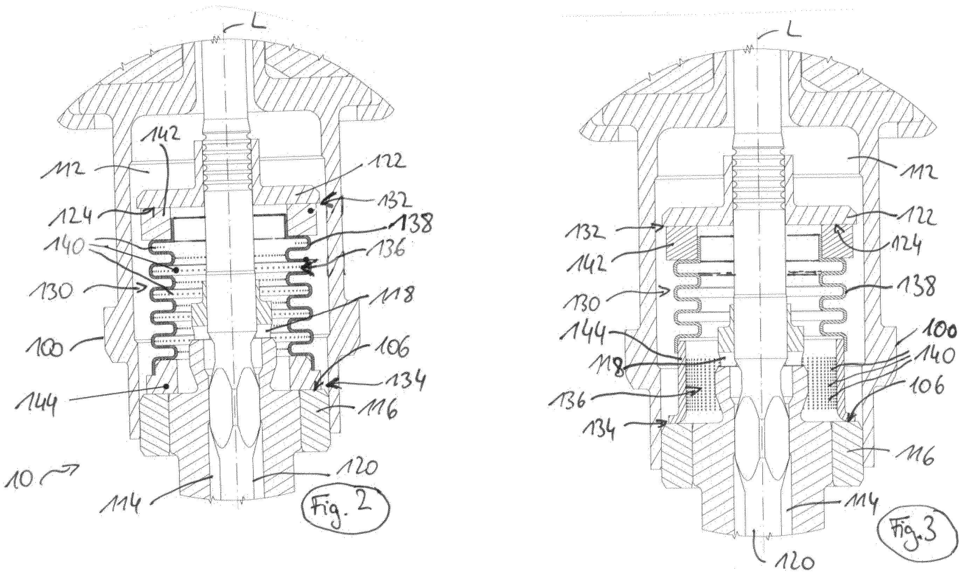

The portion of the valve assembly 10 which comprises the return spring element 130 is roughly indicated in figure 1 with a circle and shown in more detail in figure 2.

The return spring element 130 comprises a bellows 138 which is an elastically deformable sheet-metal part. At a first axial end 132 of the return spring element 130, a first annular end piece 142 is mounted on the bellows 138. The first end piece 142 is a solid metallic ring which is shifted over an axial end section of the bellows 138. At a second axial end 134 of the return spring element 130, a second annular end piece 144 is mounted on the bellows 138. The second end piece 144 is also a solid metallic ring which has a step in its outer surface and is shifted into a further axial end section of the bellows 138 so that the further axial end section of the bellows 138 abuts the step of the second end piece 144. Fluid-tight welded connections are established between the first end piece 142 and the bellows 138 and between the second end piece 144 and the bellows 138.

By means of the above-mentioned further piece of the valve body 100 which shapes the return spring chamber and by means of the nozzle body of the valve body 100, first and second portions 112, 114 of the cavity 110 of the valve body 100 are shaped. The first portion 112 comprises the return spring chamber in the present embodiment. The second portion 114 extends from the first portion 112 towards the fluid outlet end 104. It has a smaller cross-sectional area than the first portion 112.

The second portion 114 is hydraulically connected to the first portion 112 by means of a plurality of lateral openings 118 in an upstream end section of the nozzle body which projects into the return spring chamber. The shaft of the valve needle 120 extends through a central axial aperture at the upstream end of the nozzle body and basically completely fills the aperture so that the latter may not significantly contribute to hydraulically coupling the first and second portions 112, 114.

A shaft of the valve needle 120 extends from the sealing element 126 through the second portion 114 and further into the first portion 112 where the seat plate 122 is positioned and fixed to the shaft. The seat plate 122 may expediently extend radially outwards from the shaft. The seat plate 122 comprises a spring seat 124 of the valve needle 120. At a downstream end of the return spring chamber, the valve body 100 has a seat portion 116 which defines a radially extending surface of the cavity 110 that represents a spring seat 106 of the valve body 100.

The first end 132 - more specifically the first end piece 142 - of the return spring element 130 sealingly the rests against the spring seat 124 of the valve needle 120. The second end 134 - more specifically the second end piece 144 - of the return spring element sealingly rests against the spring seat 106 of the valve body 100. That the first end 132 or the second end 134 sealingly rest against the respective spring seats 124 and 106, respectively, means in particular that a fluid tight connection is established at the interface between the seat plate 122 and the first and piece 142 and between the second and piece 144 and the seat portion 116, respectively.

The seat portion 116 is arranged axially between the seat plate 122 and the sealing element 126 so that the return spring element 130 extends circumferentially around the longitudinal axis L and, thus, around the shaft of the valve needle 120. Further, the seat portion 116 extends circumferentially around the longitudinal axis L and around the second portion 114 of the cavity 110. In addition, the seat plate 122 extends around the longitudinal axis L and around the shaft of the valve needle 120 so that the seat plate 122 and the shaft together completely overlap the return spring element 130 in top view along the longitudinal axis L. In this way, the valve needle 120, together with the return spring element 30, covers the openings 118 which hydraulically connect the first portion 112 of the cavity 110 to the second portion 114.

In order to enable fluid passing through the return spring element 130 so that it can reach the openings 118 on its way from the fluid inlet end 102 to the fluid outlet end 104 and can flow from the first portion 112 further into the second portion 114, the bellows 138 has a multitude of filter holes 140 which perforate the bellows 138 in radial direction to form a filter sieve 136. In the present embodiment, the filter holes are of equal size, having a diameter of 30 µm, for example. Fluid coming from the fluid inlet end 102 flows to an outer circumferential surface of the bellows 138 and has to flow through the sieve 136 into the inside of the bellows 138 to reach the openings 118 and flow further through the second portion 114 of the cavity 110 of the valve body 100 to the fluid outlet end 104.

The fluid injection valve 1 additionally comprises a filter tube 150 adjacent to the fluid inlet end 102. The filter tube 150 additionally represents a calibration tube for adjusting the preload of a calibration spring 230. The calibration spring 230 biases the armature 220 in axial direction into contact with the valve needle 120. The filter sieve 136 represented by the filter holes 140 in the bellows 138 is operable to filter particles from the fuel which are in the cavity 100 downstream of the filter tube 150, for example due to contamination during assembly of the fuel injection valve 1.

Figure 3 shows a second exemplary embodiment of a fuel injection valve 1 in a longitudinal section view corresponding to that of figure 2. The fuel injection valve 1 of the second embodiment corresponds in general to that of the first embodiment.

However, the return spring element 113 of the valve assembly 10 of the fluid injection valve 1 according to the second embodiment has a bellows 138 which is not perforated by filter holes 140. In other words, the outer circumferential surface of the bellows 138 represents a simply-connected topological space. Instead of the bellows 138, the second end piece 144 - which is an axially elongated metallic sleeve, i.e. a cylindrical shell, in the present embodiment -is perforated by the filter holes 142 form the filter sieve 136. In a further variant (not shown in the figures), the bellows 138 as well as the second end piece 144 and/or the first end piece 142 may be perforated by filter holes 140 to form the filter sieve 136.

## Claims

1. Valve assembly (10) for a fluid injection valve (1) comprising
- a valve body (100) having a fluid inlet end (102), a fluid outlet end (104), and a cavity (110) which hydraulically connects the fluid inlet end (102) to the fluid outlet end (104),
- a valve needle (120) which interacts with the valve body (100) for preventing fluid flow from the fluid outlet end (104) in a closing position and which is displaceable away from the closing position to enable fluid flow out of the valve body (100) from the fluid outlet end (104), and
- a return spring element (130) which is seated against the valve needle (120) at a first end (132) and against the valve body (100) at a second end (134) and is preloaded for biasing the valve needle (120) towards the closing position,
**characterized in that**
the return spring element (130) comprises an elastically deformable bellows (138) which is pre-compressed in the valve assembly (10) for biasing the valve needle (120) towards the closing position and a filter sieve (136) for filtering the fluid which flows through the cavity (110) to the fluid outlet end (104) in operation of the valve assembly (10) wherein
- the bellows (138) comprises a multitude of filter holes (140) which perforate the bellows (138) for forming the filter sieve (136) or a section of the filter sieve (136) and/or
- the return spring element (130) comprises a rigid, annular end piece (142, 144) to which an axial end sections of the bellows is fixed in fluid tight fashion, the end piece (144) comprising a multitude of filter holes (140) which perforate the end piece (144) for forming the filter sieve (136) or a section of the filter sieve (136).

2. The valve assembly (10) according to the preceding claim, wherein end piece (142, 144) is connected to the bellows (138) by means of a welded connection.

3. The valve assembly (10) according to one of the preceding claims, wherein the valve needle (120) has a seat plate (122) which comprises a spring seat (124) of the valve needle (120) against which the first end (132) of the return spring element (130) sealingly rests.

4. The valve assembly (10) according to one of the preceding claims, wherein the valve body (100) has a seat portion (116) which comprises a spring seat (106) of the valve body (100) against which the second end (134) of the return spring element (130) sealingly rests.

5. The valve assembly (10) according to claim 3 and 4, wherein
- the seat portion (116) is positioned, in direction along a longitudinal axis (L) of the valve needle (120), between the seat plate (122) and a sealing element (126) of the valve needle (120) which is positioned adjacent to the fluid outlet end (104).

6. The valve assembly (10) according to the preceding claim, wherein the seat plate (122), the seat portion (116) and the return spring element (130) extend circumferentially around the longitudinal axis (L).

7. The valve assembly (10) according to the preceding claim, wherein
- the cavity (110) has a first portion (112) and a second portion (114) downstream of the first portion (112), the second portion (114) being hydraulically connected to the first portion (112) by means of at least one opening (118),
- the second portion (114) extends from the seat portion (116) towards the fluid outlet end (104) and has a smaller cross-sectional area than the first portion (112) so that it is laterally surrounded by the seat portion (116),
- the valve needle (120) extends from the second portion (114) into the first portion (112) so that the seat plate (122) is positioned in the first portion (112), and
- the valve needle (120) together with the return spring element (130) cover the opening (118) so that fluid, on its way from the fluid inlet end to the fluid outlet end, has to pass the filter sieve (136) before entering the second portion (114) through the opening (118) .

8. Fluid injection valve (1) comprising a valve assembly (10) according to one of the preceding claims.

## Patentansprüche

1. Ventilanordnung (10) für ein Fluideinspritzventil(1), aufweisend
- einen Ventilkörper (100) mit einem Fluideinlassende (102), einem Fluidauslassende (104) und einem Hohlraum (110), welcher das Fluideinlassende (102) hydraulisch mit dem Fluidauslassende (104) verbindet,
- eine Ventilnadel (120), welche mit dem Ventilkörper (100) interagiert, um in einer schließenden Stellung Fluidstrom aus dem Fluidauslassende (104) zu verhindern, und welche aus der schließenden Stellung weg verlagerbar ist, um Fluidstrom aus dem Ventilkörper (100) von dem Fluidauslassende (104) zu ermöglichen, und
- ein Rückstellfederelement (130), welches an einem ersten Ende (132) an der Ventilnadel (120) und an einem zweiten Ende (134) an dem Ventilkörper (100) anliegt und vorgespannt ist, um die Ventilnadel (120) in Richtung auf die schließende Stellung vorzuspannen,
**dadurch gekennzeichnet, dass**
das Rückstellfederelement (130) einen elastisch verformbaren Balg (138), welcher zum Vorspannen der Ventilnadel (120) in Richtung auf die schießende Stellung in der Ventilanordnung (10) vorkomprimiert ist, und ein Filtersieb (136) zum Filtern des Fluids aufweist, welches im Betrieb der Ventilanordnung (10) durch den Hohlraum (110) zu dem Fluidauslassende (104) strömt, wobei
- der Balg (138) eine Vielzahl von Filterlöchern (140) aufweist, welche den Balg (138) durchlöchern, um das Filtersieb (136) oder einen Abschnitt des Filtersiebs (136) zu bilden, und/oder
- das Rückstellfederelement (130) ein starres, ringförmiges Endstück (142, 144) aufweist, an welches ein axialer Endabschnitt des Balgs in fluiddichter Weise befestigt ist, wobei das Endstück (144) eine Vielzahl von Filterlöchern (140) aufweist, welche das Endstück (144) durchlöchern, um das Filtersieb (136) oder einen Abschnitt des Filtersiebs (136) zu bilden.

2. Ventilanordnung (10) nach dem vorhergehenden Anspruch, wobei das Endstück (142, 144) mittels einer geschweißten Verbindung mit dem Balg (138) verbunden ist.

3. Ventilanordnung (10) nach einem der vorhergehenden Ansprüche, wobei die Ventilnadel (120) eine Sitzplatte (122) aufweist, welche einen Federsitz (124) der Ventilnadel (120) aufweist, an welchem das erste Ende (132) des Rückstellfederelements (130) abdichtend anliegt.

4. Ventilanordnung (10) nach einem der vorhergehenden Ansprüche, wobei der Ventilkörper (100) einen Sitzabschnitt (116) aufweist, welcher einen Federsitz (106) des Ventilkörpers (100) aufweist, an welchem das zweite Ende (134) des Rückstellfederelements (130) abdichtend anliegt.

5. Ventilanordnung (10) nach Anspruch 3 und 4, wobei
- der Sitzabschnitt (116) in Richtung entlang einer longitudinalen Achse (L) der Ventilnadel (120) zwischen der Sitzplatte (122) und einem Dichtelement (126) der Ventilnadel (120) positioniert ist, welches angrenzend an das Fluidauslassende (104) positioniert ist.

6. Ventilanordnung (10) nach dem vorhergehenden Anspruch, wobei sich die Sitzplatte (122), der Sitzabschnitt (116) und das Rückstellfederelement (130) über den Umfang um die longitudinale Achse (L) herum erstrecken.

7. Ventilanordnung (10) nach dem vorhergehenden Anspruch, wobei
- der Hohlraum (110) einen ersten Abschnitt (112) und einen zweiten Abschnitt (114) stromabwärts von dem ersten Abschnitt (112) aufweist, wobei der zweite Abschnitt (114) hydraulisch mit dem ersten Abschnitt (112) mittels mindestens einer Öffnung (118) verbunden ist,
- der zweite Abschnitt (114) sich von dem Sitzabschnitt (116) in Richtung auf das Fluidauslassende (104) erstreckt und eine kleinere Querschnittsfläche als der erste Abschnitt (112) aufweist, so dass er seitlich von dem Sitzabschnitt (116) umgeben ist,
- sich die Ventilnadel (120) aus dem zweiten Abschnitt (114) in den ersten Abschnitt (112) erstreckt, so dass die Sitzplatte (122) in dem ersten Abschnitt (112) positioniert ist, und
- die Ventilnadel (120) zusammen mit dem Rückstellfederelement (130) die Öffnung (118) abdecken, so dass Fluid auf seinem Weg von dem Fluideinlassende zu dem Fluidauslassende das Filtersieb (136) passieren muss, bevor es durch die Öffnung (118) in den zweiten Abschnitt (114) gelangt.

8. Kraftstoffeinspritzventil (1), aufweisend eine Ventilanordnung (10) nach einem der vorhergehenden Ansprüche.

## Revendications

1. Ensemble de soupape (10) pour une soupape d'injection de fluide (1), comprenant
un corps de soupape (100) ayant une extrémité d'entrée de fluide (102), une extrémité de sortie de fluide (104), et une cavité (110) qui relie hydrauliquement l'extrémité d'entrée de fluide (102) à l'extrémité de sortie de fluide (104),
une aiguille de soupape (120) qui interagit avec le corps de soupape (100) pour empêcher l'écoulement de fluide depuis l'extrémité de sortie de fluide (104) dans une position de fermeture et qui peut être déplacée hors de la position de fermeture pour permettre l'écoulement de fluide hors du corps de soupape (100) depuis l'extrémité de sortie de fluide (104), et
un élément ressort de rappel (130) qui est placé contre l'aiguille de soupape (120) à une première extrémité (132) et contre le corps de soupape (100) à une seconde extrémité (134) et est préchargé pour solliciter l'aiguille de soupape (120) vers la position de fermeture,
**caractérisée en ce que**
l'élément ressort de rappel (130) comprend un soufflet déformable élastiquement (138) qui est pré-comprimé dans l'ensemble de soupape (10) pour solliciter l'aiguille de soupape (120) vers la position de fermeture et un tamis filtrant (136) pour filtrer le fluide qui s'écoule à travers la cavité (110) vers l'extrémité de sortie de fluide (104) pendant le fonctionnement de l'ensemble de soupape (10)
le soufflet (138) comprenant une multitude de trous de filtre (140) qui perforent le soufflet (138) pour former le tamis de filtre (136) ou une section du tamis de filtre (136) et/ou
l'élément ressort de rappel (130) comprenant une pièce d'extrémité annulaire rigide (142, 144) sur laquelle une section d'extrémité axiale du soufflet est fixée de manière étanche aux fluides, la pièce d'extrémité (144) comprenant une multitude de trous de filtre (140) qui perforent la pièce d'extrémité (144) pour former le tamis de filtre (136) ou une section du tamis de filtre (136).

2. Ensemble de soupape (10) selon la revendication précédente, une pièce d'extrémité (142, 144) étant reliée au soufflet (138) au moyen d'une liaison soudée.

3. Ensemble de soupape (10) selon l'une des revendications précédentes, l'aiguille de soupape (120) ayant une plaque de siège (122) qui comprend un siège de ressort (124) de l'aiguille de soupape (120) contre lequel repose de manière étanche la première extrémité (132) de l'élément ressort de rappel (130).

4. Ensemble de soupape (10) selon l'une des revendications précédentes, le corps de soupape (100) ayant une partie de siège (116) qui comprend un siège de ressort (106) du corps de soupape (100) contre lequel repose de manière étanche la seconde extrémité (134) de l'élément ressort de rappel (130).

5. Ensemble de soupape (10) selon l'une des revendications 3 à 4,
la partie de siège (116) étant positionnée, dans la direction le long d'un axe longitudinal (L) de l'aiguille de soupape (120), entre la plaque de siège (122) et un élément d'étanchéité (126) de l'aiguille de soupape (120) qui est positionné de manière adjacente à l'extrémité de sortie de fluide (104).

6. Ensemble de soupape (10) selon la revendication précédente, la plaque de siège (122), la partie de siège (116) et l'élément ressort de rappel (130) s'étendant circonférentiellement autour de l'axe longitudinal (L).

7. Ensemble de soupape (10) selon la revendication précédente,
la cavité (110) ayant une première partie (112) et une seconde partie (114) en aval de la première partie (112), la seconde partie (114) étant reliée hydrauliquement à la première partie (112) au moyen d'au moins une ouverture (118),
la seconde partie (114) s'étendant de la partie de siège (116) vers l'extrémité de sortie de fluide (104) et ayant une section transversale plus petite que la première partie (112) de sorte qu'elle soit entourée latéralement par la partie de siège (116),
l'aiguille de soupape (120) s'étendant de la seconde partie (114) dans la première partie (112) de sorte que la plaque de siège (122) soit positionnée dans la première partie (112), et
l'aiguille de soupape (120) avec l'élément ressort de rappel (130) couvrant l'ouverture (118) de sorte que le fluide, sur son chemin de l'extrémité d'entrée de fluide à l'extrémité de sortie de fluide, doive passer à travers le tamis de filtre (136) avant d'entrer dans la seconde partie (114) par l'ouverture (118).

8. Soupape d'injection de fluide (1) comprenant un ensemble de soupape (10) selon l'une des revendications précédentes.
